# EUROPEAN PATENT SPECIFICATION

(11) **EP 2 530 349 B1**
(45) Date of publication and mention of the grant of the patent: **27.05.2015**
(21) Application number: 11737090.8
(22) Date of filing: 27.01.2011
(51) Int. Cl.: F16D 43/18

(54) **CENTRIFUGAL CLUTCH DEVICE**
ZENTRIFUGALKUPPLUNGSVORRICHTUNG
DISPOSITIF D'EMBRAYAGE CENTRIFUGE

(30) Priority: 27.01.2010 JP 2010015839
(43) Date of publication of application: 05.12.2012
(73) Proprietor: Kabushiki Kaisha F.C.C., Hamamatsu-shi, Shizuoka 431-1394 (JP)
(72) Inventor: KATAOKA, Makoto, Hamamatsu-shi Shizuoka 431-1304 (JP); YAMAGISHI, Masahiro, Hamamatsu-shi Shizuoka 431-1304 (JP); MIWA, Naoyuki, Hamamatsu-shi Shizuoka 431-1304 (JP); MURAI, Masataka, Hamamatsu-shi Shizuoka 431-1304 (JP); AONO, Kaoru, Hamamatsu-shi Shizuoka 431-1304 (JP)
(74) Representative: Cohausz & Florack
(86) International application number: PCT/JP2011/051599
(87) International publication number: WO 2011/093379

(56) References cited:
- EP-A1- 1 564 428
- JP-A- 9 236 140
- JP-U- 59 037 440
- TW-B- I 275 715
- US-A- 4 830 163

## Description

### Field of the Invention

The present invention relates to a centrifugal clutch apparatus for transmitting or cutting off the driving power of a driving device (e.g. engine of a motorcycle) by making the clutch devices to be abutted against or separated from the inner circumferential surface of a driven-side rotational member via friction members.

### Description of Background Art

A clutch apparatus is usually arranged on a power transmitting train for transmitting the driving power of an engine of vehicle (e.g. motorcycle such as scooter) to a driving wheel and the centrifugal clutch apparatus using the centrifugal force is known as a main clutch apparatus. Such a centrifugal clutch comprises, as disclosed in Patent Document 1, a driving plate connected to a crank shaft of an engine, clutch devices (clutch shoes) swingably mounted on the driving plate, and a housing having an inner circumferential surface against which the clutch shoes can abut via friction members (facings) when the clutch shoes are swung by the centrifugal force.

The driving power of an engine can be transmitted to an output shaft by the abutment of the friction members against the inner circumferential surface of the housing due to swing motions of the clutch devices (clutch shoes) caused by the rotation of the driving plate exceeding a predetermined speed. Each surface of the clutch devices (clutch shoes) opposing to the inner circumferential surface of the housing is formed as having a circular arc configuration and the friction member is secured on the circular arc surface.

In the centrifugal clutch apparatus, a noise called as "clutch squeal" would be sometimes caused during a process in which the clutch devices contact the inner circumferential surface of the housing and slide thereon via the friction members (i.e. a period from a time in which the friction members contact the inner circumferential surface of the housing to a time in which the housing has increased its rotational speed to a same speed as that of the driving plate). To suppress generation of the "clutch squeal", it is proposed, for example in Patent Document 2, a centrifugal clutch apparatus in which a vibration isolating ring is crimped around the outer circumferential surface of a housing.

Furthermore, document US 4,830,163 discloses a centrifugal clutch according to the preamble of claim 1.

### Documents of Prior art

### Patent Documents

Patent Document 1: Japanese Laid-open Patent Publication No. 36806/2004
Patent Document 2: Japanese Laid-open Patent Publication No. 236140/1997

### Disclosure of the Invention

### Problems to be solved by the Invention

However in the centrifugal clutch apparatus of the prior art described above, since it requires a press-formed vibration isolating ring having a complicated configuration, there is a problem of increasing the manufacturing cost. In addition, it is afraid that the vibration isolating ring mounted on the outer circumferential surface of the driving plate would be slipped off from the driving plate by the centrifugal force. Thus it requires a process for tightly and rigidly crimping the vibration isolating ring onto the driving plate so as to have a sufficient strength against the centrifugal force. This is also a cause of increasing the manufacturing cost.

It is therefore an object of the present invention to provide a centrifugal clutch apparatus which can suppress generation of the "clutch squeal" with a simple structure and thus reduce the manufacturing cost.

### Means for solving problems

For achieving the object mentioned above, there is provided, according to the present invention of claim 1, a centrifugal clutch apparatus comprising a driving-side rotational member rotatable around a shaft member connected to a driving device; clutch devices mounted on the driving-side rotational member and movable radially outward of the driving-side rotational member when a centrifugal force is exerted on the clutch devices; a driven-side rotational member rotatable independent from the driving-side rotational member and arranged for covering the driving-side rotational member and having an inner circumferential surface able to be engaged with the clutch devices moved radially outward; and friction members secured on surfaces of the clutch devices opposed to the inner circumferential surface of the driven-side rotational member and adapted to be abutted against it so as to transmit the driving power of the driving device to the driven-side rotational member when the clutch devices are moved due to the centrifugal force, characterized in that the inner circumferential surface of the driven-side rotational member is formed with a groove; and that the centrifugal clutch apparatus further comprises a tension member formed as a ring-shaped member able to be snap-fitted into the groove and held therein under a condition expanded radially outward.

The present invention of claim 2 is a centrifugal clutch apparatus of claim 1 wherein the tension member is formed as an annular member having a cut-off portion in part thereon and adapted to be snap-fitted into the groove with reducing its diameter at the cut-off portion and to be held in the groove under a condition expanded radially outward by its own spring-back elasticity.

The present invention of claim 3 is a centrifugal clutch apparatus of claim 2 wherein the tension member is formed as an annular member having a cut-off portion in part thereon with one end of the cut-off portion being axially staggered from the other end of the cut-off portion and adapted to be snap-fitted into the groove with reducing its diameter and to be held in the groove under a condition expanded radially outward at the cut-off portion by its own spring-back elasticity.

The present invention of claim 4 is a centrifugal clutch apparatus of claim 1 or 2 wherein the tension member is formed as a substantially-annular member having a plurality of bent portions bent alternately in its axial direction and adapted to be snap-fitted into the groove with reducing its diameter and to be held in the groove under a condition expanded radially outward by its own spring-back elasticity and the bent portions being contacted with walls of the groove.

### Effects of the Invention

According to the present invention of claim 1, since the inner circumferential surface of the driven-side rotational member is formed with a groove, and the centrifugal clutch apparatus further comprises a tension member formed as a ring-shaped member able to be snap-fitted into the groove and held therein under a condition expanded radially outward by its own spring-back elasticity, it is possible to suppress generation of the "clutch squeal" with a simple structure and thus to reduce the manufacturing cost.

According to the present invention of claim 2, since the tension member is formed as an annular member having a cut-off portion in part thereon and adapted to be snap-fitted into the groove with reducing its diameter at the cut-off portion and to be held in the groove under a condition expanded radially outward by its own spring-back elasticity, it is possible to firmly mount the tension member within the groove and thus to more surely suppress generation of the "clutch squeal".

According to the present invention of claim 3, since the tension member is formed as an annular member having a cut-off portion in part thereon with one end of the cut-off portion being axially staggered from the other end of the cut-off portion and adapted to be snap-fitted into the groove with reducing its diameter at the cut-off portion and to be held in the groove under a condition expanded radially outward by its own spring-back elasticity, it is possible to firmly mount the tension member within the groove and thus to further surely suppress generation of the "clutch squeal".

According to the present invention of claim 4, since the tension member is formed as a substantially-annular member having a plurality of bent portions bent alternately in its axial direction and adapted to be snap-fitted into the groove with reducing its diameter and to be held in the groove under a condition expanded radially outward by its own spring-back elasticity and the bent portions being contacted with walls of the groove, it is possible to urge and abut the tension member against the groove at multiple portions (axially projected portions) and thus to efficiently suppress generation of the "clutch squeal".

### Brief Description of the Drawings

[Fig.1] A longitudinal section view of the centrifugal clutch apparatus of a first embodiment of the present invention;
[Fig.2] A perspective view of the driven-side rotational member of the centrifugal clutch apparatus of Fig. 1 to which the tension member is not mounted;
[Fig.3] A perspective view of the driven-side rotational member of the centrifugal clutch apparatus of Fig. 1 to which the tension member is mounted;
[Fig.4] A schematic view showing mounted conditions of the tension member of the centrifugal clutch apparatus of Fig. 1 within the groove of the driven-side rotational member in which Fig. 4(a) is a cross-sectional view taken along a line a-a of Fig. 3, Fig. 4(b) is a cross-sectional view taken along a line b-b of Fig. 3, and Fig. 4(c) is a cross-sectional view taken along a line c-c of Fig. 3;
[Fig.5] A plan view of the tension member of the centrifugal clutch apparatus of Fig. 1;
[Fig.6] A perspective view of the tension member of the centrifugal clutch apparatus of Fig. 1;
[Fig.7] A perspective view of the tension member of one modification of the tension member of Figs. 5 and 6;
[Fig.8] An external view of the tension member used in the centrifugal clutch apparatus of a second embodiment of the present invention in which Fig. 8(a) is a plan view of the tension member of the second embodiment and Fig. 8(b) is a front elevation view of the tension member of the second embodiment;
[Fig.9] A perspective view of the driven-side rotational member of the centrifugal clutch apparatus of the second embodiment to which the tension member is mounted;
[Fig.10] A schematic view showing mounted conditions of the tension member of the centrifugal clutch apparatus of the second embodiment in which Fig. 10(a) is a cross-sectional view taken along a line d-d of Fig. 9 and Fig. 10(b) is a cross-sectional view taken along a line e-e of Fig. 9;
[Fig.11] A plan view showing another modification of the tension member of the present invention;
[Fig.12] A cross-sectional view of another modification of the tension member having a rectangular cross-section;
[Fig.13] A cross-sectional view of another modification of the tension member having a trapezoidal cross-section;
[Fig.14] A cross-sectional view of another modification of the tension member having an elliptical cross-section;
[Fig.15] A schematic cross-sectional view of another modification of the driven-side rotational member having a groove of a trapezoidal cross-section; and
[Fig.16] A schematic cross-sectional view of another modification of the driven-side rotational member having a groove of a narrow width.

### Preferable modes for carrying out the Invention

Preferable embodiments of the present invention will be described with reference to accompanied drawings.

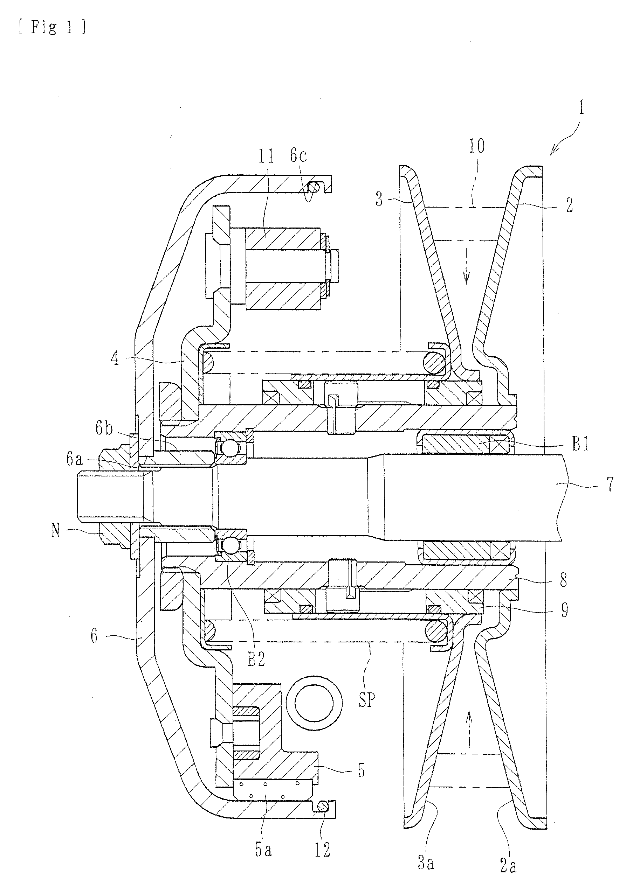

The centrifugal clutch apparatus of a first embodiment of the present invention can be applied to the centrifugal clutch apparatus of a motorcycle such as a scooter for performing transmission and cutting off of a driving power of an engine of a motorcycle and mainly comprises, as shown in Fig. 1, a driven pulley 1, a driving plate (driving-side rotational member) 4, clutch devices 5, an output housing (driven-side rotational member) 6, friction members 5a, and a tension member 12.

The driven pulley 1 can be driven by a V belt 10 (endless belt) of plastic resin driven by a driving pulley (not shown) rotated by an engine (driving device) of a motorcycle. The driven pulley 1 comprises an axially immovable sheave 2 and an axially movable sheave 3 formed of pressed metal. Tapered surfaces (immovable tapered surface 2a and movable tapered surface 3a) for supporting the V belt 10 are oppositely formed between the immovable sheave 2 and the movable sheave 3.

The immovable sheave 2 is secured on a cylindrical shaft member 8 at its center and the shaft member 8 is rotatably supported on a shaft 7 via a needle bearing B1 and a ball bearing B2. The movable sheave 3 is mounted on the shaft member 8 via a spline engagement so that the movable sheave 3 is rotatable together with the shaft member 8 and accordingly with the immovable sheave 2 and also axially movable toward and away from the immovable sheave 2.

More particularly, the movable sheave 3 is normally urged toward the immovable sheave 2 by a spring SP (i.e. toward a direction in which the movable tapered surface 3a approaches the immovable tapered surface 2a) and moved toward a direction (the left-hand direction in Fig. 1) getting away from the immovable sheave 2 against the urging force of the spring SP when the rotational radius of the V belt 10 around the driven pulley 1 is reduced. During this operation, a shaft member 9 of the movable sheave 3 can slide on the shaft member 8 of the immovable sheave 2 along the spline engagement formed between the shaft members 8, 9.

In usual the centrifugal clutch is so designed that the rotational radius of the V belt 10 around the driving pulley is increased when the engine speed is increased and accordingly the V belt 10 in the driven pulley 1 tends to be moved radially inward as shown by arrows in Fig. 1. Thus the movable sheave 3 is moved toward the left-hand direction in Fig. 1 (a direction in which the rotational radius of the V belt around the driven pulley 1 is reduced) and the shift-up operation can be achieved. Accordingly, the shift change operation can be automatically achieved by the centrifugal clutch apparatus.

The driving plate 4 functioning as a driving-side rotational member is rotatable together with the shaft member 8 connected to the engine (driving device), in particular, rotatable together with the immovable sheave 2 of the driven pulley 1 secured on the shaft member 8. A plurality of clutch devices 5 and weights 11 are mounted on the outer circumference of the driving plate 4. The clutch devices 5 can be swung radially outward of the driving plate 4 when the rotational speed is increased to that exceeding a predetermined value.

The output housing (driven-side rotational member) 6 is rotatable independently from the driving plate 4 and has a covering portion for covering the clutch devices 5 and weights 11 mounted on the driving plate 4, the covering portion having an inner circumferential surface arranged oppositely to the clutch devices 5 so that it can be abutted by swung clutch devices 5. In particular, the output housing 6 has a substantial configuration like an "umbrella" for covering the outer periphery of the driving plate 4 and has an aperture 6a in which the tip end of the shaft 7 is inserted. In addition, a cylindrical member 6b extending toward the driven pulley 1 is integrally secured (e.g. by welding) in the aperture 6a and a spline is formed on the inner circumference of the cylindrical member 6a for engaging a spline formed on the outer circumference of the shaft 7.

The friction member 5a is secured on a surface of each clutch devices 5 opposing to the inner circumferential surface of the output housing (driven-side rotational member) 6 and is adapted to be abutted against this inner circumferential surface when the clutch devices 5 is swung radially outward to transmit the driving power of an engine to the output housing (driven-side rotational member) 6. That is, the friction member 5a of each clutch devices 5 is abutted against the inner circumferential surface of the output housing 6 in order to rotate it together with the driving plate 4, when the rotational speed of the driven pulley 1 is increased over a predetermined value and thus the clutch devices 5 is swung radially outward.

The output housing 6 is secured to the tip end of the shaft 7 by a fastening nut N. The base end of the shaft 7 is connected to a transmission formed by reduction gears to drive a rear wheel of a motorcycle. That is, the clutch members 5 are abutted against the output housing 6 via the friction members 5a by centrifugal force when the rotational speed of the driven pulley 1 exceeds a predetermined speed, and accordingly the driving power from an engine can be transmitted to the rear wheel through the driven pulley 1, driving plate 4, output housing 6, shaft 7, and transmission.

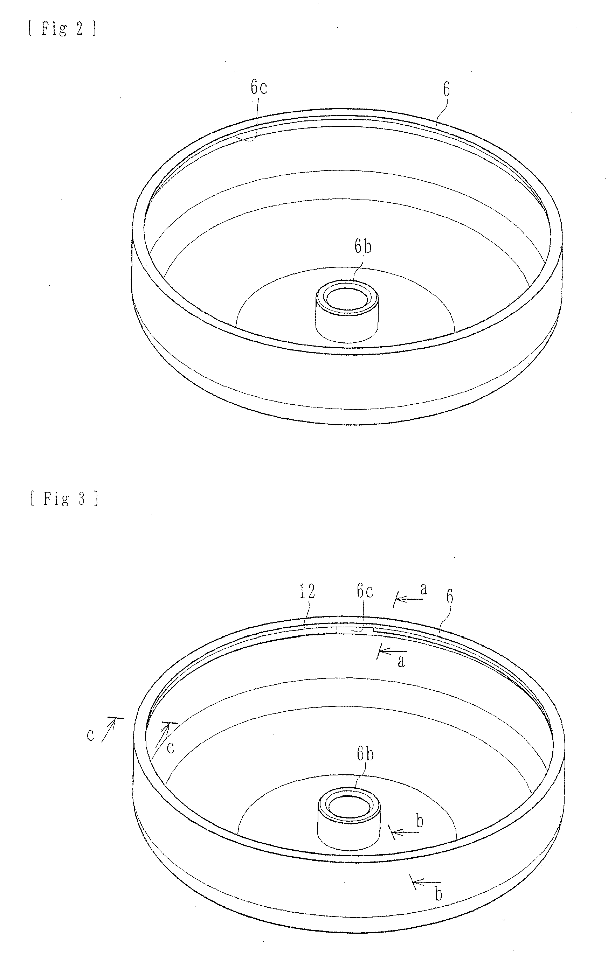

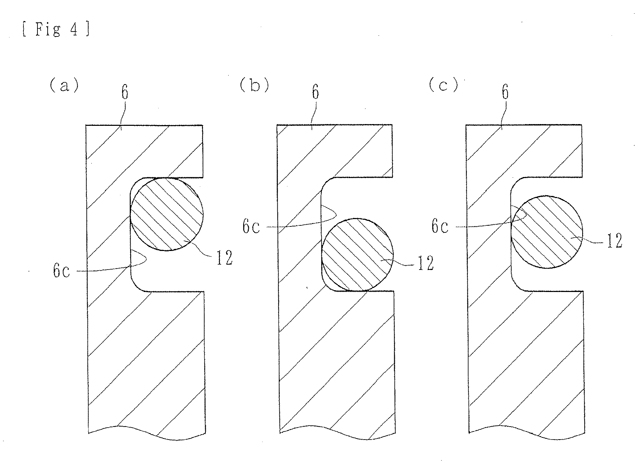

According to the present invention, a groove 6c is formed on the inner circumferential surface of the output housing (driven-side rotational member) 6 at a position nearer to the opened end of the output housing 6 than the abutting position of the friction member 5a, and a tension member 12 is snap-fitted into the groove 6c as shown in Fig. 1. The groove 6c is formed along the inner circumferential surface of the output housing 6 (see Fig. 2) and has a rectangular cross-section and width larger than the thickness of the tension member 12 to achieve easy snap-fitting of the tension member 12 (see Figs. 1 and 4).

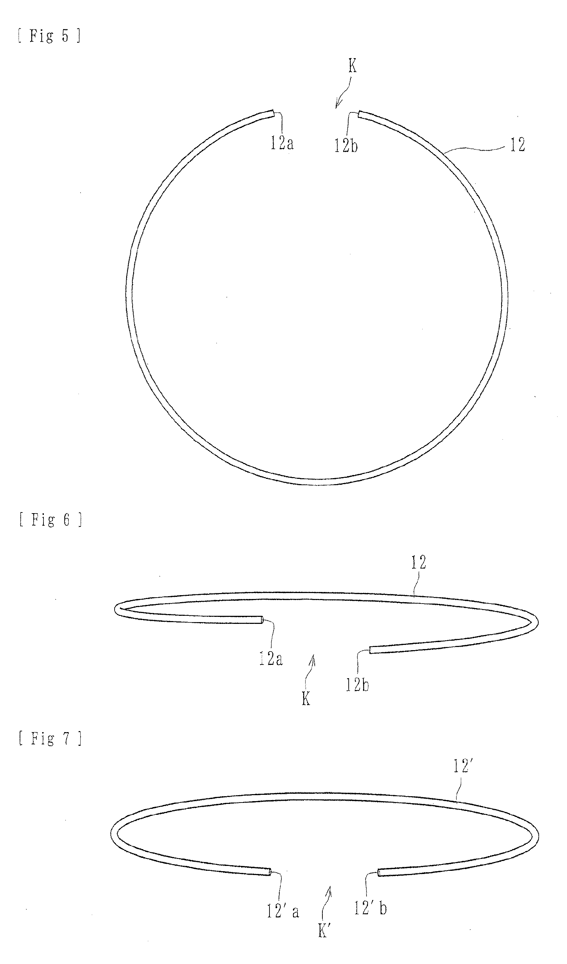

As shown in Figs. 5 and 6, the tension member 12 is formed as a ring-shaped member (annular member of metallic linear material) able to be snap-fitted into the groove 6c and held therein under a condition expanded radially outward by its own spring-back elasticity. That is, the outer diameter of the tension member 12 is set slightly larger than the diameter of the groove 6c and thus the tension member 12 gets a condition urged radially outward (i.e. tensioned condition) when it is snap-fitted into the groove 6c.

Further according to the present invention, as shown in Figs. 5 and 6, the tension member 12 is formed as an annular member having a cut-off portion K in part thereon (the cut-off portion K being formed by ends 12a, 12b) and adapted to be snap-fitted into the groove 6c, with reducing its diameter and to be held in the groove 6c under a condition expanded radially outward by its own spring-back elasticity.

In addition, as shown in Fig. 6, the tension member 12 is formed as an annular member having a cut-off portion K in part thereon with one end 12a of the cut-off portion K being axially (vertical direction in Fig. 6) staggered from the other end 12b of the cut-off portion K and adapted to be snap-fitted into the groove 6c with reducing its diameter at the cut-off portion K and to be held in the groove 6c under a condition expanded radially outward (left-hand and right-hand direction in Fig. 6) by its own spring-back elasticity. Thus as shown in Fig. 3, the tension member 12 is mounted within the groove 6c so that it is held in the groove 6c under a condition expanded radially outward and axially by its own spring-back elasticity. This is shown in Fig. 4 in which Fig. 4(a) is a cross-sectional view taken along a line a-a of Fig. 3, Fig. 4(b) is a cross-sectional view taken along a line b-b of Fig. 3, and Fig. 4(c) is a cross-sectional view taken along a line c-c of Fig. 3.

As described above, since the tension member 12 is held within the groove 6c formed on the inner circumferential surface of the output housing (driven-side rotational member) 6 with being expanded radially outward and axially, it is possible to suppress the "clutch squeal" by a simple structure and thus to reduce the manufacturing cost of the centrifugal clutch apparatus. In particular, since the tension member 12 is mounted on the inner circumferential surface of the output housing 6, the centrifugal force caused by rotation of the output housing 6 acts to further firmly hold the tension member 12 within the groove 6c and thus it is possible to eliminate any additional securing device of the tension member 12 and accordingly to further reduce the manufacturing cost of the centrifugal clutch apparatus.

As described above, since the tension member 12 is formed with the cut-off portion K and adapted to be snap-fitted into the groove 6c with reducing its diameter at the cut-off portion K, it is possible to firmly mount the tension member 12 in the groove 6c under a condition expanded radially outward by its own spring-back elasticity and thus to further surely suppress generation of the "clutch squeal". In addition, since the cut-off portion K has one end 12a axially staggered from the other end 12b of the cut-off portion K, the tension member 12 can be snap-fitted into the groove 6c with reducing its diameter at the cut-off portion K. Accordingly, it is possible to further firmly hold the tension member 12 in the groove 6c and thus to further surely suppress generation of the "clutch squeal".

It is possible to use a modified tension member 12' shown in Fig. 7 in place of the tension member 12. The tension member 12' is formed with a cut-off portion K' in which one end 12'a of the cut-off portion K' is not axially staggered from the other end 12'b (i.e. both ends 12'a, 12'b are in coplanar). Of course, such a tension member 12' can be snap-fitted into the groove 6c with reducing its diameter and firmly mounted in the groove 6c under a condition expanded radially outward by its own spring-back elasticity.

Then a second embodiment of the centrifugal clutch apparatus of the present invention will be described.

Similarly to the first embodiment, the centrifugal clutch apparatus of this embodiment of the present invention can be applied to a motorcycle such as a scooter for performing transmission and cutting off of a driving power of an engine of a motorcycle. In the second embodiment, although a tension member 13 is used in place of the tension member 12 of the first embodiment, other main components such as driven pulley 1, driving plate (driving-side rotational member) 4, clutch devices 5, output housing (driven-side rotational member) 6, friction member 5a etc. are same as those used in the first embodiment and thus detailed description of them will be omitted.

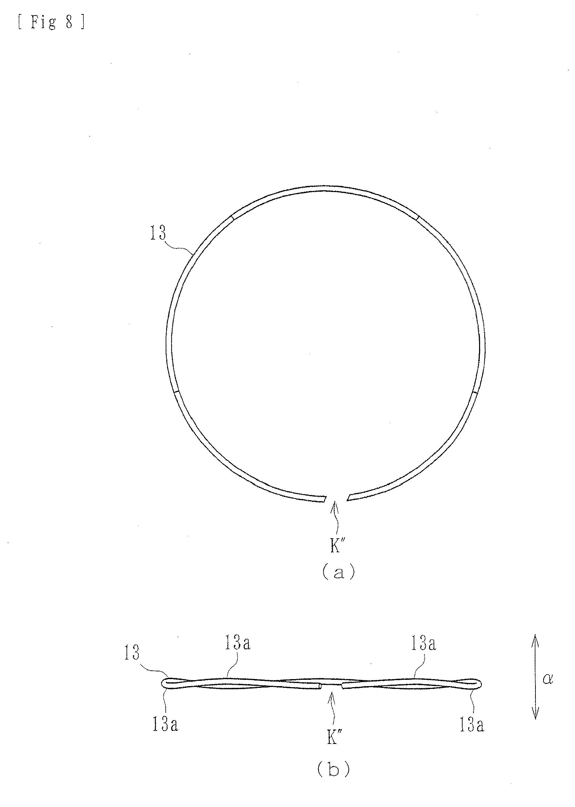

As shown in Fig. 8, the tension member 13 of this embodiment is a substantially-annular member (having a shape in which a cutting-off portion K is provided in part thereon) having a plurality of bent portions 13a bent alternately in its axial direction (directionain Fig. 8(b)) and formed as a part called as "corrugated spring" made by pressing a metallic linear member into an annulus having a plurality of axially bent portions of a corrugated configuration.

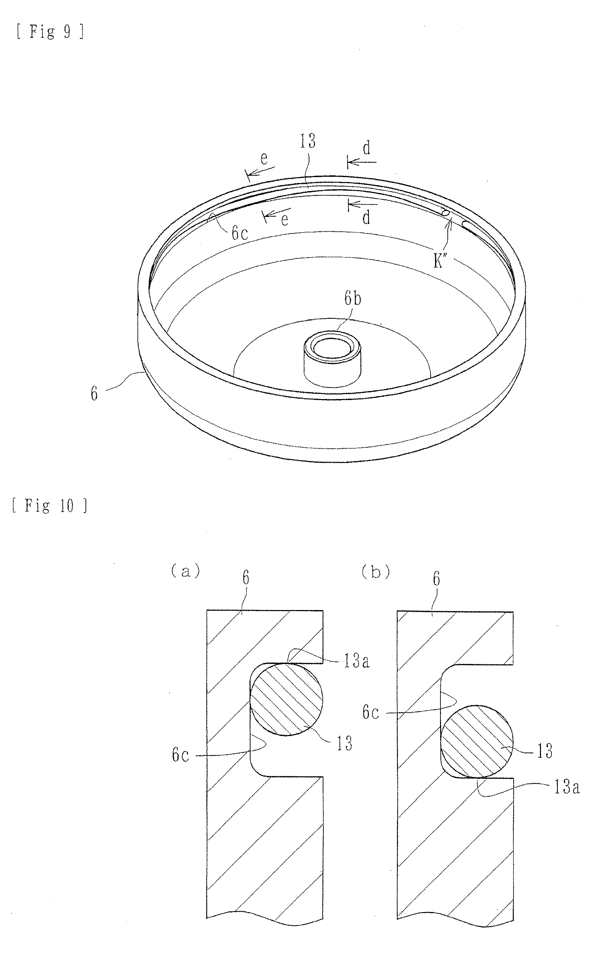

As shown in Fig. 9, the tension member 13 can be snap-fitted into the groove 6c of the output housing (driven-side rotational member) 6 with reducing its diameter and held in the groove 6c under a condition in which the bent portions 13a are contacted with side walls of the groove 6c.

In particular, as shown in Fig. 9, when the tension member 13 is mounted in the groove 6c, the top of corrugation of each bent portion 13a is contacted with the upper-side (i.e. opened end-side) wall surface of the groove 6c by its spring-back elasticity (Fig. 10(a)) and on the contrary, the bottom of corrugation of each bent portion 13a is contacted with the lower-side (i.e. opposite-side to the opened end) wall surface of the groove 6c by its spring-back elasticity (Fig. 10(b)). That is, according to this embodiment, since the tension member 13 has a plurality of bent portions 13a, it can contact to the groove 6c at positions of the bent portions 13a.

According to the second embodiment of the centrifugal clutch apparatus of the present invention, since the tension member 13 is formed with a substantially-annular member having a plurality of bent portions 13a bent alternately in its axial direction and can be snap-fitted into the groove 6c with reducing its diameter and held in the groove 6c under a condition expanded radially outward by its own spring-back elasticity and the plurality of bent portions 13a being contacted with walls of the groove 6c, the tension member 13 can be contacted with the groove 6c at many points and thus efficiently suppress generation of the "clutch squeal".

In view of efficient suppression of generation of the "clutch squeal", it is preferable to form the bent portions 13a as many as possible. In addition, although the tension member 13 shown in Fig. 8 is formed with a cut-off portion K", it is possible to form the tension member 13 of "corrugated spring" not having the cut-off portion K".

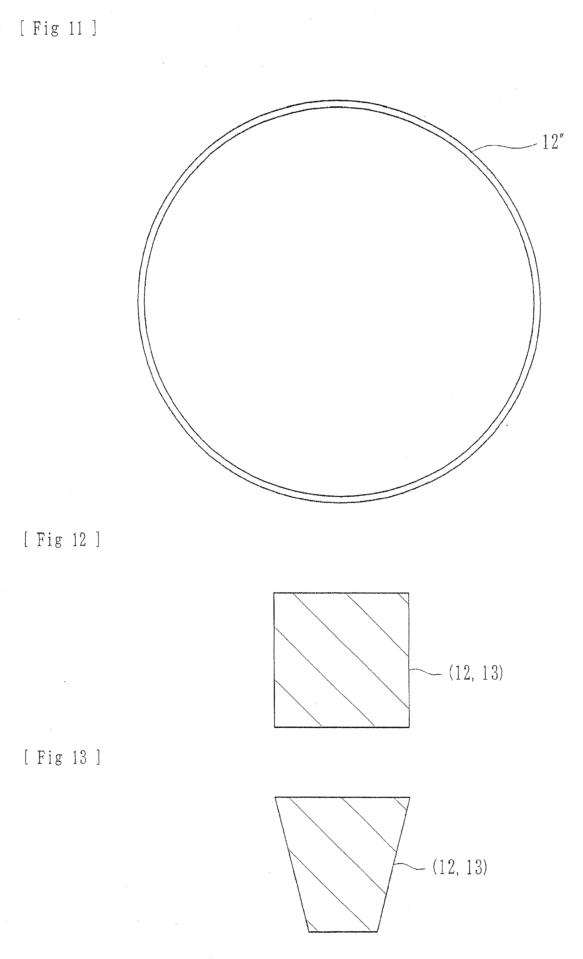

The centrifugal clutch apparatus of the present invention has been described with reference to the preferred embodiments. However the present invention is not limited to these embodiments. For example, the tension member is not limited to that made of metal and any material can be applied to the tension member if it comprises a ring-shaped member able to be snap-fitted into the groove 6c and held therein under a condition expanded radially outward by its own spring-back elasticity. In addition, it is possible to use a tension member 12" such as shown in Fig. 11 not having any cut-off portion if it is held in the groove 6c under a condition expanded radially outward by its own spring-back elasticity.

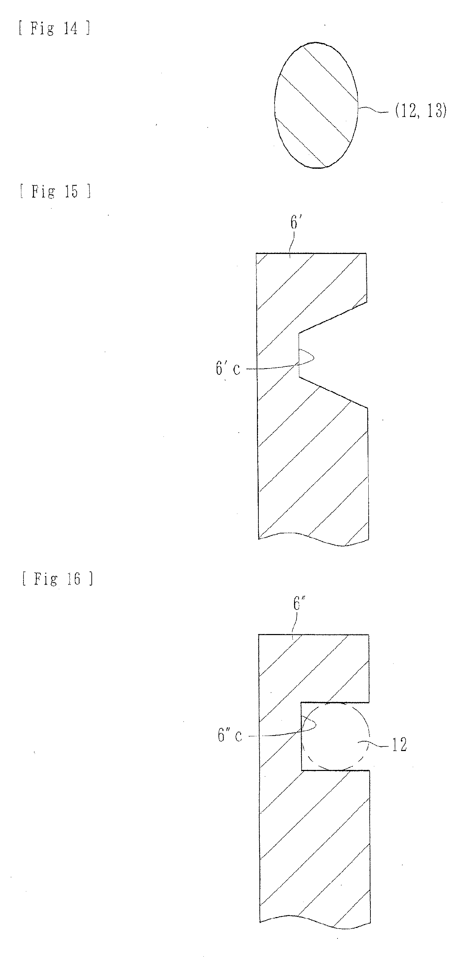

Furthermore it is possible to use various kinds of cross-sectional configuration of the tension member, for example, a rectangular configuration of Fig. 12, a trapezoidal configuration of Fig. 13 and elliptical configuration of Fig. 14. In addition, it is possible to use an output housing 6' formed with a groove 6'c of trapezoidal cross-section (i.e. tapered side walls) shown in Fig. 15 and an output housing 6" formed with a groove 6"c having a width substantially same as a diameter of the tension member 12 shown in Fig. 16 (the width narrower than those shown in the embodiments).

### Applicability in Industry

The present invention can be applied to any centrifugal clutch apparatus if the inner circumferential surface of the driven-side rotational member is formed with a groove and the centrifugal clutch apparatus further comprises a tension member formed as a ring-shaped member able to be snap-fitted into the groove and held therein under a condition expanded radially outward by its own spring-back elasticity, although it has a different external view or other additional functions.

### Description of Reference numerals

- 1: driven pulley
- 2: immovable sheave
- 3: movable sheave
- 4: driving plate (driving-side rotational member)
- 5: clutch device
- 5a: friction member
- 6: output housing (driven-side rotational member)
- 6c: groove
- 7: shaft
- 8: shaft member
- 9: shaft member
- 10: endless belt
- 11: weight
- 12, 13: tension member
- K, K', K": cut-off portion

## Claims

1. A centrifugal clutch apparatus comprising:
a driving-side rotational member (4) rotatable around a shaft member (8) connected to a driving device;
clutch devices (5) mounted on the driving-side rotational member (4) and movable radially outward of the driving-side rotational member (4) when a centrifugal force is exerted on the clutch devices (5);
a driven-side rotational member (6) rotatable independent from the driving-side rotational member (4) and arranged for covering the driving-side rotational member (4) and having an inner circumferential surface able to be engaged with the clutch devices (5) moved radially outward; and
friction members (5a) secured on surfaces of the clutch devices (5) opposed to the inner circumferential surface of the driven-side rotational member (6) and adapted to be abutted against it so as to transmit the driving power of the driving device to the driven-side rotational member (6) when the clutch devices (5) are moved due to the centrifugal force **characterized in:**
**that** the inner circumferential surface of the driven-side rotational member (6) is formed with a groove (6c, 6'c, 6"c); and
**that** the centrifugal clutch apparatus further comprises a tension member (12, 12', 13) formed as a ring-shaped member able to be snap-fitted into the groove (6c, 6'c, 6"c) and held therein under a condition expanded radially outward.

2. A centrifugal clutch apparatus of claim 1 wherein the tension member (12, 12', 13) is formed as an annular member having a cut-off portion (K, K', K") in part thereon and adapted to be snap-fitted into the groove (6c, 6'c, 6"c) with reducing its diameter at the cut-off portion (K, K', K") and to be held in the groove (6c, 6'c, 6"c) under a condition expanded radially outward by its own spring-back elasticity.

3. A centrifugal clutch apparatus of claim 2 wherein the tension member (12) is formed as an annular member having a cut-off portion (K) in part thereon with one end (12a) of the cut-off portion (K) being axially staggered from the other end (12b) of the cut-off portion (K) and adapted to be snap-fitted into the groove (6c, 6'c, 6"c) with reducing its diameter at the cut-off portion (K) and to be held in the groove (6c, 6'c, 6"c) under a condition expanded radially outward by its own spring-back elasticity.

4. A centrifugal clutch apparatus of claim 1 or 2 wherein the tension member (13) is formed as a substantially-annular member having a plurality of bent portions (13a) bent alternately in its axial direction and adapted to be snap-fitted into the groove (6c, 6'c, 6"c) with reducing its diameter and to be held in the groove (6c, 6'c, 6"c) under a condition expanded radially outward by its own spring-back elasticity and the bent portions (13a) being contacted with walls of the groove (6c, 6'c, 6"c).

## Patentansprüche

1. Fliehkraftkupplungsvorrichtung umfassend:
ein antriebsseitiges Drehelement (4), das um ein mit einer Antriebseinrichtung verbundenes Wellenelement (8) drehbar ist;
Kupplungselemente (5), die an dem antriebsseitigen Drehelement (4) angebracht und in Radialrichtung nach außen von dem antriebsseitigen Drehelement (4) beweglich sind, wenn eine Fliehkraft auf die Kupplungselemente (5) ausgeübt wird;
ein abtriebsseitiges Drehelement (6), das unabhängig von dem antriebsseitigen Drehelement (4) drehbar ist und dazu angeordnet ist, das antriebsseitige Drehelement (4) abzudecken, und eine Innenumfangsfläche hat, die dazu in der Lage ist, mit den in Radialrichtung nach außen bewegten Kupplungselemente (5) in Eingriff gebracht zu werden; und
Reibelemente (5a), die an Oberflächen der Kupplungselemente (5) entgegengesetzt zu der Innenumfangsfläche des abtriebsseitigen Drehelements (6) befestigt und mit dieser in Eingriff bringbar sind, um so die Antriebsleistung der Antriebseinrichtung zu dem abtriebsseitigen Drehelement (6) zu übertragen, wenn die Kupplungselemente (5) auf Grund der Fliehkraft bewegt werden,
**dadurch gekennzeichnet,**
**dass** die Innenumfangsfläche des abtriebsseitigen Drehelements (6) mit einer Rille (6c, 6'c, 6"c) ausgebildet ist und
**dass** die Fliehkraftkupplungsvorrichtung ferner ein Spannungselement (12, 12', 13) aufweist, das als ein ringförmiges Element ausgebildet ist, das dazu in der Lage ist, in die Rille (6c, 6'c, 6"c) eingerastet und unter einem in Radialrichtung nach außen ausgedehnten Zustand in derselben gehalten zu werden.

2. Fliehkraftkupplungsvorrichtung nach Anspruch 1, wobei das Spannungselement (12, 12', 13) als ein ringförmiges Element, das einen weggeschnittenen Abschnitt (K, K', K") hat, ausgebildet ist und dafür eingerichtet ist, in die Rille (6c, 6'c, 6"c) eingerastet zu werden, wobei es seinen Durchmesser an dem weggeschnittenen Abschnitt (K, K', K") verringert, und unter einem in Radialrichtung durch seine eigene Rückfederungselastizität nach außen ausgedehnten Zustand in der Rille (6c, 6'c, 6"c) gehalten zu werden.

3. Fliehkraftkupplungsvorrichtung nach Anspruch 2, wobei das Spannungselement (12) als ein ringförmiges Element, das einen weggeschnittenen Abschnitt (K) hat, wobei das eine Ende (12a) des weggeschnittenen Abschnitts (K) in Axialrichtung gegenüber dem anderen Ende (12b) des weggeschnittenen Abschnitts (K) versetzt ist, ausgebildet ist und dafür eingerichtet ist, in die Rille (6c, 6'c, 6"c) eingerastet zu werden, wobei es seinen Durchmesser an dem weggeschnittenen Abschnitt (K) verringert, und unter einem in Radialrichtung durch seine eigene Rückfederungselastizität nach außen ausgedehnten Zustand in der Rille (6c, 6'c, 6"c) gehalten zu werden.

4. Fliehkraftkupplungsvorrichtung nach Anspruch 1 oder 2, wobei das Spannungselement (13) als ein im Wesentlichen ringförmiges Element, das mehrere gebogene Abschnitte (13a), die abwechselnd in seiner Axialrichtung gebogen sind, hat, ausgebildet ist und dafür eingerichtet ist, in die Rille (6c, 6'c, 6"c) eingerastet zu werden, wobei es seinen Durchmesser verringert, und unter einem in Radialrichtung durch seine eigene Rückfederungselastizität nach außen ausgedehnten Zustand in der Rille (6c, 6'c, 6"c) gehalten zu werden, und die gebogenen Abschnitte (13a) in Kontakt zu Wänden der Rille (6c, 6'c, 6"c) gebracht werden.

## Revendications

1. Appareil d'embrayage centrifuge comprenant:
un élément rotatif (4), côté entraînement, pouvant tourner autour d'un élément d'arbre (8) relié à un dispositif d'entraînement;
des dispositifs d'embrayage (5) montés sur l'élément rotatif (4), côté entraînement, et mobiles radialement vers l'extérieur de l'élément rotatif (4),
côté entraînement, quand une force centrifuge est exercée sur les dispositifs d'embrayage (5);
un élément rotatif (6), côté entraîné, pouvant tourner indépendamment de l'élément rotatif (4), côté entraînement, et agencé pour couvrir l'élément rotatif (4), côté entraînement, et ayant une surface circonférentielle intérieure pouvant être engagée par les dispositifs d'embrayage (5) déplacés radialement vers l'extérieur; et
des éléments de friction (5a) fixés sur des surfaces des dispositifs d'embrayage (5) opposées à la surface circonférentielle intérieure de l'élément rotatif (6), côté entraîné, et adaptés pour venir en butée sur ledit élément rotatif, de façon à transmettre la puissance d'entraînement du dispositif d'entraînement à l'élément rotatif (6), côté entraîné, quand les dispositifs d'embrayage (5) sont déplacés à cause de la force centrifuge, **caractérisé**
**en ce que** la surface circonférentielle intérieure de l'élément rotatif (6), côté entraîné, est formée par une rainure (6c, 6'c, 6"c); et
**en ce que** l'appareil d'embrayage centrifuge comprend en outre un élément de tension (12, 12', 13) formé comme un élément de forme annulaire pouvant être encliqueté dans la rainure (6c, 6'c, 6"c) et maintenu, dans la rainure, dans un état dilaté radialement vers l'extérieur.

2. Appareil d'embrayage centrifuge de la revendication 1, dans lequel l'élément de tension (12, 12', 13) est formé comme un élément annulaire ayant une partie découpée (K, K', K") partiellement sur ledit élément annulaire, et adapté pour être encliqueté dans la rainure (6c, 6'c, 6"c), le diamètre dudit élément de tension diminuant au niveau de la partie découpée (K, K', K"), et pour être maintenu dans la rainure (6c, 6'c, 6"c) dans un état dilaté radialement vers l'extérieur, par son propre retour élastique.

3. Appareil d'embrayage centrifuge de la revendication 2, dans lequel l'élément de tension (12) est formé comme un élément annulaire ayant une partie découpée (K) partiellement sur ledit élément annulaire, une extrémité (12a) de la partie découpée (K) étant axialement décalée par rapport à l'autre extrémité (12b) de la partie découpée (K), et adapté pour être encliqueté dans la rainure (6c, 6'c, 6"c), le diamètre dudit élément de tension diminuant au niveau de la partie découpée (K), et pour être maintenu dans la rainure (6c, 6'c, 6"c) dans un état dilaté radialement vers l'extérieur, par son propre retour élastique.

4. Appareil d'embrayage centrifuge de la revendication 1 ou 2, dans lequel l'élément de tension (13) est formé comme un élément sensiblement annulaire ayant une pluralité de parties recourbées (13a), recourbées alternativement dans sa direction axiale, et adapté pour être encliqueté dans la rainure (6c, 6'c, 6"c), le diamètre dudit élément de tension étant réduit, et pour être maintenu dans la rainure (6c, 6', 6"c) dans un état dilaté radialement vers l'extérieur par son propre retour élastique, les parties recourbées (13a) étant au contact de parois de la rainure (6c, 6'c, 6"c).
